Europäisches Patentamt

European Patent Office

Office européen des brevets

(19)

(11) Veröffentlichungsnummer: **0 007 603**
A1

# (12) EUROPÄISCHE PATENTANMELDUNG

(21) Anmeldenummer: 79102588.5

(22) Anmeldetag: 23.07.79

(51) Int. Cl.³: **C 08 L 23/10**
C 08 L 23/12, C 08 L 23/16
C 08 J 3/00

(30) Priorität: 27.07.78 DE 2832895

(43) Veröffentlichungstag der Anmeldung:
06.02.80 Patentblatt 80/3

(84) Benannte Vertragsstaaten:
DE FR IT

(71) Anmelder: HOECHST AKTIENGESELLSCHAFT
Zentrale Patentabteilung Postfach 80 03 20
D-6230 Frankfurt/Main 80(DE)

(72) Erfinder: Gebler, Horst, Dr.
Zeil 16
D-6238 Hofheim am Taunus(DE)

(72) Erfinder: Heufer, Gert, Dr.
Silcherweg 10
D-6232 Bad Soden am Taunus(DE)

(72) Erfinder: Kloos, Friedrich, Dr.
Südring 112
D-6500 Mainz(DE)

(54) Polypropylen-Formmasse und Verfahren zu ihrer Herstellung.

(57) Eine optimal schlagfeste lineare Polypropylen-Formmasse wird erhalten, wenn mann beim Mischen von Polypropylen mit der kautschukartigen Äthylen-Propylen-Mischpolymerisat- Komponente ein Verhältnis der Schmelzindices der beiden Komponenten von

$$\frac{\text{MFI (230/5)-PP}}{\text{MFI (230/5)-K}} = 1{,}7\text{-}20$$

einhält.

EP 0 007 603 A1

Croydon Printing Company Ltd.

HOECHST AKTIENGESELLSCHAFT    HOE 78/F 153    Dr.DA/cr

Verfahren zum Herstellen einer Polypropylen-Formmasse

Die Erfindung betrifft ein Verfahren zur Herstellung einer thermoplastischen Formmasse auf Basis Polypropylen und einem kautschukartigen Äthylen-Propylen-Mischpolymerisat.

Polypropylen besitzt neben einigen sehr günstigen Eigenschaften, wie beispielsweise einer relativ niedrigen Dichte, einer ausgezeichneten Beständigkeit gegen hohe Temperaturen und wässrige und nichtwässrige Flüssigkeiten, auch weniger günstige Eigenschaften, wozu eine mangelhafte Schlagfestigkeit bei Temperaturen unterhalb Raumtemperatur, insbesondere unterhalb 0°C, zu zählen sind. Ausreichende Schlagfestigkeiten sind insbesondere für Transportkästen, Koffer, Automobilteile in der Innen- und Außenanwendung wichtig. Polyäthylen hoher Dichte, aus dem man derartige Teile herstellt, besitzt zwar eine gute Schlagfestigkeit, zeigt jedoch eine geringere Beständigkeit gegen hohe Temperaturen und eine ungenügende Beständigkeit gegen Rißbildung.

Es ist bekannt, Gemische aus Polypropylen und Polyäthylen zu verwenden. Jedoch hat es sich aber gezeigt, daß Mischungen dieser Polymeren eine kaum verbesserte Schlagfestigkeit im Vergleich zum Polypropylen besitzen. Außerdem neigen aus derartigen Mischungen hergestellte Formkörper dazu, bereits bei geringem Durchbiegen weiß anzulaufen und matt zu werden.

Ferner hat man Polypropylen zur Verbesserung der Schlagfestigkeit bei Temperaturen unterhalb Raumtemperatur mit amorphen Copolymeren von Äthylen und Propylen, aber auch mit anderen kautschukartigen Polymeren, z.B. Polyisobutylen, vermischt (vgl. DE-OS 26 42 053).

- 2 -

Die Herstellung solcher schlagfester thermoplastischer Formmassen auf Basis von Polypropylen durch Polymerisation scheitert oft daran, daß dabei sehr hohe Anteile an löslichen Polymeren entstehen, die zu Problemen bei der Durchmischung der Suspension und zu hohen Monomerverlusten führen.

Ein Nachteil der bisher bekannten Verfahren zur Herstellung von binären schlagfesten Polypropylen-Formmassen besteht darin, daß optimal schlagfeste Formmassen nur zufällig oder mit großen Versuchsaufwand zu erhalten sind.

Es wurde nunmehr gefunden, daß man mit einfachen Mitteln eine optimal schlagfeste binäre Polypropylen-Formmasse erhalten kann, wenn man ein bestimmtes Verhältnis der Schmelzindices von Polypropylen und der kautschukartigen Komponente einhält.

Gegenstand der Erfindung ist somit das in den Ansprüchen genannte Verfahren.

Gemäß dem erfindungsgemäßen Verfahren werden Polypropylen und ein kautschukartiges Material miteinander gemischt und homogenisiert.

Für das Verfahren eignen sich Propylenhomopolymerisate, statistische Propylencopolymerisate mit bis zu 10 Gew.-% eines 1-Olefins mit 2 bis 6 Kohlenstoffatomen bzw. Blockmischpolymerisate von Propylen mit bis zu 15 Gew.-% eines 1-Olefins mit 2 bis 6 Kohlenstoffatomen, beispielsweise Äthylen, Buten-1, Penten, Hexen. Diese Polymeren weisen eine Dichte von 0,89 bis 0,92 g/cm$^3$ und einen MFI (230/5) von 0,5 bis 30, vorzugsweise von 0,5 bis 20g/10 min auf.

Das kautschukartige Material ist ein Mischpolymerisat aus 30 bis 80 Gew.-% Äthylen und 20 bis 70 % Propylen, vorzugsweise 40 bis 70 % Äthylen und 30 bis 60 Gew.-%

Propylen. Bis zu 10 Gew.-%, bezogen auf die Gesamtmenge der Monomeren, eines oder mehrerer anderer Comonomeren, welche wenigstens zwei nichtkonjugierte C-C-Bindungen enthalten, können einpolymerisiert sein. Beispiele für die letztgenannten Monomeren sind Äthylennorbornen, Dicyclopentadien, 1,4-Hexadien und ähnliche. Die Dichte dieser Mischpolymerisate beträgt 0,85 bis 0,89 g/cm$^3$, der MFI (230/5) 0,05 bis 10 g/10 min, vorzugsweise 0,1 bis 6 g/10 min.

An der kautschukartigen Komponente wird zunächst der MFI (230/5)-K gemessen. Er liegt im Bereich von 0,05-10 g/10 min. Entsprechend dem gefundenen Wert wird ein Polypropylen derart ausgewählt, daß dessen MFI (230/5)-PP zum MFI-K im folgenden Verhältnis steht:

$$\frac{\text{MFI (230/5)-PP}}{\text{MFI (230/5)-K}} = 1,7 - 20, \text{ vorzugsweise } 2 - 10$$

Selbstverständlich ist es auch möglich, die umgekehrte Reihenfolge einzuhalten und zu einem gegebenen Polypropylen eine geeignete kautschukartige Komponente auszuwählen.

Sodann werden Polypropylen und Kautschuk im Verhältnis 1,5 bis 19 : 1, vorzugsweise 2 bis 8 : 1 unter Zusatz der üblichen Stabilisatoren, Antioxidantien, Pigmente, Füllstoffe, Gleitmittel, etc. gemischt und in Granulatform überführt. Für das Mischen sind die üblichen Mischer geeignet. Zur Überführung der Mischung in die Granulatform eignen sich alle Kneter, Walzwerke udgl., die in der Lage sind, die beiden Komponenten fein zu zerteilen und zu homogenisieren. Derartige Kneter sind beispielsweise sogenannte Innenmischer, wie sie in der Gummiindustrie verwendet werden. Diese Maschinen bestehen aus einem beheizbaren Mantelgehäuse, in welchem sich besonders geformte Schaufeln gegeneinander drehen, wobei der Füllschacht durch einen Druckstempel verschlossen wird. Ein weiteres Beispiel sind Zweiwellenkneter, welche den Extrudern ähnlich sind und ebenfalls aus einem beheizbaren Mantelgehäuse bestehen, in welchem sich die Schaufeln gegeneinander drehen, das Material durchkneten und vom Füllschacht zum Auswurf fördern. Geeignete Mischmaschinen sind beispielsweise auch die in der Gummiindustrie und in der PVC-verarbeitenden Industrie verwendeten Zweiwalzwerke, bei denen sich zwei beheizte Walzen mit unterschiedlicher Geschwindigkeit gegeneinander drehen und das aufgegebene Material im Walzenspalt plastifizieren und homogenisieren. Das Mischen und Homogenisieren erfolgt bei einer Temperatur, die abhängig von der gewählten Maschinentype ist, im allgemeinen jedoch im Bereich von 160 bis 280°C, vorzugsweise 170 bis 240°C liegt. Die Mischzeit ist ebenfalls maschinenabhängig und beträgt 0,5 bis 20 min, vorzugsweise 1 bis 10 min.

Die aus diesen Komponenten und auf diese Weise hergestellten Polypropylen-Formmassen bestehen aus 95 bis 60, vorzugsweise aus 90 bis 70 Gew.-% Polypropylen, und 5 bis 40, vorzugsweise 10 bis 30 Gew.-% kautschukartigem Mischpolymerisat aus Äthylen und Propylen, welches gegebenenfalls ein oder mehrere weitere Comonomere enthalten kann.

Die erfindungsgemäß hergestellte Polypropylen-Formmasse zeichnet sich durch eine ausgezeichnete Schlagfestigkeit unterhalb Raumtemperatur, insbesondere unterhalb 0°C aus.

Für die Prüfung der Formmassen werden folgende Methoden angewendet:

|  | Dimension |  |
|---|---|---|
| MFI (230/5) | g/10 min | DIN 53 735 |
| Kerbschlagzähigkeit (aKV) | $mJ/mm^2$ | DIN 53 453 |

- 5 -

| Plattenfall-test | cm | Auf die eingespannte Platte fällt ein Fallgewicht von 1 kg mit einem Dorn von 12 mm Durchmesser. Gemessen wird die Höhe, bei welcher 50 % der Platten nicht zerstört werden. |
|---|---|---|

Beispiel 1

Je 10 Teile eines Äthylen-Propylen-Mischpolymerisates (Kautschuk I, II u. III) werden in Form von etwa 4x4x4 mm kleinen Schnitzeln mit 90 Teilen eines pulverförmigen Polypropylens der Dichte 0,902 g/cm$^3$ und einem MFI (230/5) von 2,49 g/10 min vermischt und anschließend in einem Zweiwellenkneter (Doppelschneckenextruder) mit einem Schneckendurchmesser von 35 mm, einer Schneckenlänge von 17 D und einem am Zylinderanfang angeordneten Mischteil bei einer Zylindertemperatur von 230°C in ein Stranggranulat überführt. Aus diesem Granulat werden Formkörper spritzgegossen. An ihnen werden die in der Tabelle 1 aufgeführten Eigenschaftswerte gemessen.

Kautschuk I:   MFI (230/5) = 4,0 g/10 min; bestehend aus 64 Gew.-% Äthyleneinheiten und 36 Gew.-% Propyleneinheiten

Kautschuk II:   MFI (230/5) = 1,2 g/10 min; bestehend aus 44 Gew.-% Äthyleneinheiten und 56 Gew.-% Propyleneinheiten

Kautschuk III:   MFI (230/5) = 0,1 g/10 min; bestehend aus 69 Gew.-% Äthyleneinheiten, 26 Gew.-% Propyleneinheiten und 5 Gew.-% Äthylennorborneneinheiten.

Mit Kautschuk II wird das erfindungsgemäße Verhältnis

$$\frac{\text{MFI (230/5)-PP}}{\text{MFI (230/5)-K}} = 1,7-20$$

eingehalten.

- 6 -

Beispiel 2

30 Teile eines Äthylen-Propylen-Mischpolymerisates werden in Form von etwa 4x4x4 mm kleinen Schnitzeln mit 70 Teilen eines Polypropylens, das 6,4 Gew.-% Äthylen als Blockmischcopolymer enthält, unter den gleichen Bedingungen wie in Beispiel 1 zu einem Granulat verarbeitet. Die daraus hergestellten Prüfkörper werden untersucht. Es werden die in der Tabelle 2 aufgeführten Werte gemessen.

Kautschuk III: MFI (230/5) = 0,1 g/10 min; bestehend aus 69 Gew.-% Äthyleneinheiten, 26 Gew.-% Propyleneinheiten und 5 Gew.-% Äthylennorborneneinheiten.

Kautschuk II: MFI (230/5) = 1,2 g/10 min; bestehend aus 44 Gew.-% Äthyleneinheiten und 56 Gew.-% Propyleneinheiten.

Bei Verwendung des Kautschukes II liegt das Verhältnis

$$\frac{MFI\ (230/3)-PP}{MFI\ (230/3)-K}$$

im erfindungsgemäßen Bereich.

Beispiel 3

In einem Innenmischer werden bei 180°C 10 Teile eines Äthylen-Propylen-Kautschuks und 90 Teile eines Polypropylens mit der Dichte 0,901 g/cm$^3$ und einem MFI (230/5) von 1,7 g/10 min 8 min vermischt. Die Masse wird auf einem beheizten Zweiwalzwerk zu einem Fell ausgezogen und anschließend in ein Granulat überführt. Aus diesem Granulat werden Prüfkörper gepreßt und spritzgegossen, an denen die in Tabelle 3 aufgeführten Werte gefunden werden.

Kautschuk II: MFI (230/5) = 1,2 g/10 min; bestehend aus 44 Gew.-% Äthyleneinheiten und 56 Gew.-% Propyleneinheiten

- 7 -

Kautschuk IV:   MFI (230/5) = 0,45 g/10 min; bestehend aus 41 Gew.-% Äthyleneinheiten und 59 Gew.-% Propyleneinheiten

Hier liegt bei der Verwendung des Kautschuks IV das Verhältnis

$$\frac{MFI\ (230/5)\text{-PP}}{MFI\ (239/3)\text{-K}}$$

im erfindungsgemäßen Bereich.

Tabelle 1

| | Formmasse mit | | |
| | Kautschuk I | Kautschuk II | Kautschuk III |
|---|---|---|---|
| MFI-K $\lfloor$g/10 min$\rfloor$ | 4,0 | 1,2 | 0,1 |
| MFI-PP $\lfloor$g/10 min$\rfloor$ | 2,9 | 2,9 | 2,9 |
| $\frac{\text{MFI-PP}}{\text{MFI-K}}$ | 0,73 | 2,42 | 29 |
| Plattenfall-test cm | | | |
| 0°C | 120 | 135 | 60 |
| - 30°C | 20 | 75 | 40 |

Tabelle 2

| | Formmasse | |
| --- | --- | --- |
| | Kautschuk III | Kautschuk II |
| MFI-K $[g/10\ min]$ | 0,1 | 1,2 |
| MFI-PP $[g/10\ min]$ | 9,2 | 9,2 |
| $\dfrac{\text{MFI-PP}}{\text{MFI-K}}$ | 92 | 7,67 |
| Kerbschlagzähig-keit $mJ/mm^2$ | | |
| 20°C | ohne Bruch | ohne Bruch |
| 0°C | ohne Bruch | ohne Bruch |
| - 20°C | 37,4 | 44,4 |
| - 40°C | 14,7 | 22,5 |

Tabelle 3

Formmasse mit

| | Kautschuk II | Kautschuk IV |
|---|---|---|
| MFI-K $[g/10 \, min]$ | 1,2 | 0,45 |
| MFI-PP $[g/10 \, min]$ | 1,7 | 1,7 |
| $\dfrac{\text{MFI-PP}}{\text{MFI-K}}$ | 1,42 | 3,78 |
| Kerbschlag-zähigkeit $mJ/mm^2$ | | |
| 20°C | 17,7 | 25,5 |
| 0°C | 4,4 | 9,7 |
| Plattenfall-test cm | | |
| 0°C | 90 | 125 |
| -30°C | 30 | 80 |

0007603

PATENTANSPRÜCHE

1. Verfahren zum Herstellen einer Polypropylen-Formmasse bestehend aus 95 bis 60 Gew.-% Polypropylen und 5 bis 40 Gew.-% eines kautschukartigen Äthylen-Propylen-Mischpolymerisats, durch Mischen und Homogenisieren des Kautschuks mit dem Polypropylen und Granulieren, dadurch gekennzeichnet, daß man einen Kautschuk und ein Polypropylen miteinander mischt , deren Schmelzindices MFI (230/5)-K und MFI (230/5)-PP im Verhältnis

$$\frac{MFI\ (230/5)-PP}{MFI\ (230/5)-K} = 1,7\ bis\ 20$$

zueinander stehen.

2. Verfahren nach Anspruch 1, dadurch gekennzeichnet, daß das Verhältnis

$$\frac{MFI\ (230/5)-PP}{MFI\ (230/5)-K} = 2\ bis\ 10$$

ist.

3. Polypropylen-Formmasse bestehend aus 95 bis 60 Gew.-% Polypropylen und 5 bis 40 Gew.% eines kautschukartigen Äthylen-Propylen-Mischpolymerisats, dadurch gekennzeichnet, daß die Schmelzindices von Polypropylen MFI (230/5)-PP und Kautschuk MFI (230/5)-K im Verhältnis

$$\frac{MFI\ (230/5)-PP}{MFI\ (230/5)-K} = 1,7\ bis\ 20$$

zueinander stehen.

| | | |
|---|---|---|
| **Europäisches Patentamt** | **EUROPÄISCHER RECHERCHENBERICHT** | Nummer der Anmeldung<br>EP 79102588.5 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>DE - B2 - 2 340 202</u> (UNIROYAL)<br>+ Gesamt +<br>-- | 1 - 3 |
| A | <u>DE - A1 - 2 640 850</u> (UNIROYAL)<br>+ Gesamt +<br>-- | 1 - 3 |
| A | <u>DE - A1 - 2 644 644</u> (THE B. F.<br>GOODRICH)<br>+ Gesamt +<br>---- | 1 - 3 |

**KLASSIFIKATION DER ANMELDUNG (Int.Cl.³)**

C 08 L 23/10
C 08 L 23/12
C 08 L 23/16
C 08 J  3/00

**RECHERCHIERTE SACHGEBIETE (Int. Cl.³)**

C 08 L 23/10
C 08 L 23/12
C 08 L 23/16
C 08 J  3/00

—

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| WIEN | 04-10-1979 | DICHER |

EPA form 1503.1  06.78